# EUROPÄISCHE PATENTANMELDUNG

(11) **EP 2 369 308 A1**
(43) Veröffentlichungstag der Anmeldung: **28.09.2011**
(21) Anmeldenummer: 10157142.0
(22) Anmeldetag: 22.03.2010
(51) Int. Cl.: G01F 17/00, B65B 3/04, B65B 3/14, B65B 3/28

(54) **Verfahren zur Bestimmung eines Vorkollabiervolumens eines beim Entleeren kollabierenden Behälters**

(71) Anmelder: Boehringer Ingelheim International GmbH, 55216 Ingelheim am Rhein (DE)
(72) Erfinder: Schmidt, Michael, 55216 Ingelheim am Rhein (DE); Waldeck, Andreas, 55216 Ingelheim am Rhein (DE)
(74) Vertreter: Hammann, Heinz

(57) **Zusammenfassung**

Bei einem Verfahren zur Bestimmung eines beim Befüllen und Verschließen eines flexiblen und diffusionsdichten, im Anwendungsfall kollabierenden Behälters (2) mit einer Flüssigkeit (3) eingestellten Vorkollabiervolumens (18) wird der befüllte Behälter (2) in eine Vakuumkammer (6) eingesetzt und in der Vakuumkammer (6) ein außenseitig am Behälter anliegendes, definiertes Vakuum erzeugt, bei Anliegen des definierten Vakuums wird bis zum Erreichen des Druckausgleichs eine mit der Außenatmosphäre in Kontakt stehende weitere Flüssigkeitsmenge in den Behälter (2) eingefüllt, die Masse der in den Behälter einströmenden weiteren Flüssigkeitsmenge wird gravimetrisch erfasst und aus der erfassten Flüssigkeitsmasse deren Volumen als das Vorkollabiervolumen (18) errechnet.

## Beschreibung

Die Erfindung bezieht sich auf ein Verfahren zur Bestimmung eines beim Befüllen und Verschließen eines flexiblen und diffusionsdichten, im Anwendungsfall kollabierenden Behälters mit einer Flüssigkeit eingestellten Vorkollabiervolumens und eine Vorrichtung dazu.

Zur Abgabe von flüssigen Kosmetika oder Pharmazeutika, wie Nasen-, Augen- oder Ohrensprays, sind Abgabevorrichtungen bekannt, mit welchen das flüssige Kosmetikum oder das flüssige Pharmazeutikum dosiert aus einem in der Abgabevorrichtung angeordneten flexiblen und diffusionsdichten Behälter, üblicherweise in Beutelform, abgegeben wird. Die hierbei eingesetzte Abgabevorrichtung arbeitet luftausgleichsfrei, wobei die abzugebende Flüssigkeit innerhalb der Abgabevorrichtung in einem gegenüber der Umgebung abgedichteten Behälter oder Innenbeutel bevorratet wird, der während der Entleerung kollabiert. Das Befüllen derartiger Behälter oder Innenbeutel mit Flüssigkeit, wie Pharmazeutika oder Kosmetika, erfolgt üblicherweise derart, dass in dem Behälter oder Innenbeutel Restluft verbleibt. Bei der Befüllung derartiger Behälter mit Flüssigkeit wird daher, beispielsweise um sicherzustellen, dass der flexibel-diffusionsdichte Behälter die vorgesehene Füllmenge an Flüssigkeit aufnehmen kann, dieser vor der Abfüllung mit einem definierten Überdruck aufgeblasen. Der dann voll entfaltete Behälter wird mit Flüssigkeit befüllt und mittels eines Ultraschall-Schweißverfahrens verschlossen, wobei in dem verschweißten Behälter oder Folienbeutel eine Restluftblase verbleibt. Wenn in dem Behälter nun beispielsweise eine e-thanolhaltige Flüssigkeit enthalten ist, führt ein Temperaturanstieg aufgrund des hohen Ausdehnungskoeffizienten von Ethanol zu einem Überdruck im Behälter. Dieser Überdruck hat im einsatzbereiten Zustand dieses Behälters oder Folienbeutels in der Abgabevorrichtung ggf. ein unkontrolliertes Austreten von Lösung an der Abgabeöffnung oder Abgabedüse der Abgabevorrichtung zur Folge. Dies kann zur Auskristallisation von Wirkstoff an der Abgabeöffnung oder Düsenmündung und im Extremfall zu einer Blockade der Öffnung oder Düsenmündung führen. Des Weiteren führt der gegebenenfalls entstehende Überdruck zu einer mechanischen Beanspruchung des Behälters oder Folienbeutels bei dessen Lagerung und Transport. Um das Entstehen eines unzulässigen Überdruckes zu vermeiden, wird daher vorgesehen, dass das nach der Befüllung des Behälters oder (Folien-)Beutels bestehende Restluftvolumen im Behälter oder Beutel gezielt vermindert wird, was entsprechend der anwendungsspezifischen Eigenschaften des Behälters oder Beutels dazu führt, dass dieser bereits einer (ersten) Kollabierung, der so genannten Vorkollabierung, unterworfen wird. Um diesen Prozessschritt der Vorkollabierung definiert durchführen und kontrollieren zu können, ist es notwendig, dass eingestellte Vorkollabiervolumen messen zu können.

Für die Messung des Vorkollabiervolumens stehen bisher zwei Methoden zur Verfügung und zwar zum einen die rechnerische Volumenbestimmung aufgrund einer geometrischen Vermessung der Restluftblase in computertomographischen Aufnahmen und zum anderen die Bestimmung des Restluftblasenvolumens durch Messung des Druckanstieges in einer volumenveränderbaren Messkammer eines eigens dafür entwickelten Bubble-Size-Messgerätes. Beide Methoden liefern aber nur eine indirekte Messung des Vorkollabiervolumens, da jeweils vom Behälterleervolumen, der vorgesehenen Füllmenge und der gemessenen Luftblase ausgehend das Vorkollabiervolumen rechnerisch ermittelt wird. Dies führt zu ungenauen Ergebnissen, weil die zur Rechnung benötigten Angaben für den einzelnen, jeweils zu untersuchenden Prüfling (Behälter/Beutel) nur als Mittelwerte der Füll- bzw. Behältercharge vorliegen. Zudem sind beide Methoden sehr komplex und aufwendig, so dass lediglich Proben mit einer Geschwindigkeit von einer Messung/Stunde bei der ersten Methode und ca. fünf Messungen/Stunde bei der zweiten Methode möglich sind. Auch ist eine Automatisierung dieser Messmethoden nur mit sehr hohem Aufwand möglich.

Es ist Aufgabe der Erfindung, ein Verfahren und eine Vorrichtung der eingangs genannten Art zu schaffen, das bzw. die eine schnellere und verbesserte Ermittlung des Vorkollabiervolumens eines flexiblen und diffusionsdichten sowie im Anwendungsfall kollabierenden Behälters ermöglicht.

Die Aufgabe wird erfindungsgemäß bei dem Verfahren dadurch gelöst, dass der befüllte Beutel in eine Vakuumkammer eingesetzt und in der Vakuumkammer ein außenseitig am Beutel anliegendes, definiertes Vakuum erzeugt wird, bei Anliegen des definierten Vakuums bis zum Erreichen des Druckausgleichs eine mit der Außenatmosphäre in Kontakt stehende weitere Flüssigkeitsmenge in den Beutel eingefüllt wird, die Masse der in den Beutel einströmenden weiteren Flüssigkeitsmenge gravimetrisch erfasst und aus der erfassten Flüssigkeitsmasse deren Volumen als das Vorkollabiervolumen errechnet wird.

Die Aufgabe wird erfindungsgemäß bei der Vorrichtung dadurch gelöst, dass die Vorrichtung gekennzeichnet ist durch
- eine den Behälter aufnehmende Vakuumkammer, in der ein definiertes Vakuum erzeugbar ist,
- eine von einem Flüssigkeitsreservoir ausgehende und in den in der Vakuumkammer angeordneten Behälter einführbare Fluidleitung und
- eine die Masse einer von dem Flüssigkeitsreservoir in den Behälter einfließenden weiteren Flüssigkeitsmenge erfassende Mess- oder Wiegevorrichtung.

Aufgrund der gravimetrischen Erfassung der in den Behälter einfließenden weiteren Flüssigkeitsmasse bzw. des Gewichtes dieser Flüssigkeitsmenge ist es möglich, daraus direkt das Vorkollabiervolumen mittels der bekannten Dichte der Flüssigkeit zu ermitteln und zu berechnen. Eine rechnerische Einbindung von Mittelwerten aus Behälterleervolumen oder Füllmenge ist nicht mehr notwendig. Bei der gravimetrischen Bestimmung des Vorkollabiervolumens wird der zu prüfende Behälter in der Vakuumkammer einem verminderten Umgebungsdruck ausgesetzt. Die im verschweißten Behälter enthaltene Restluft gleicht sich aufgrund der Flexibilität des Behälters an den in der Vakuumkammer verminderten, außen anliegenden Umgebungsdruck an und bläht den vorkollabierten Behälter auf. Der in der Vakuumkammer herrschende Unterdruck überträgt sich somit auf die in dem Behälter oder Folienbeutel verbliebene Restluft. Wird nun der Behälter beispielsweise mit eine Kanüle angestochen, die mit der mit weiterer Flüssigkeit befüllten Fluidleitung und mit einer mit der normalen Außenatmosphäre oder dem Umgebungsdruck in Kontakt stehenden weiteren Flüssigkeitsmenge verbunden ist, so strömt bis zum Ausgleich an die Außenatmosphäre oder den normalen Umgebungsdruck genau das Volumen an weiterer Flüssigkeit in den Behälter oder den Beutel ein, um das der Behälter vorkollabiert war. Befindet sich in der Kanüle und der Fluidleitung vor dem Einstechen in den Behälter ausschließlich die weitere Flüssigkeit, so lässt sich das Vorkollabiervolumen problemlos über die Ermittlung der Masse des Volumens der in den Beutel oder Behälter einströmenden weiteren Flüssigkeitsmenge gravimetrisch ermitteln. Aus der festgestellten Masse lässt sich dann mithilfe der Dichte der jeweils in den Behälter eingefüllten weiteren Flüssigkeit das Volumen der eingefüllten weiteren Flüssigkeitsmenge und damit das Vorkollabiervolumen errechnen.

Insbesondere dann, wenn die Fluidleitung mit einem Fluidreservoir in Verbindung steht, dessen Masse gravimetrisch, vorzugsweise kontinuierlich, erfasst wird, lässt sich der durch den Abfluss von Flüssigkeit aus dem Flüssigkeitsreservoir in den Behälter in dem Reservoir einstellende Gewichtsverlust unmittelbar erfassen und anzeigen sowie daraus mithilfe der Dichte der Flüssigkeit das Vorkollabiervolumen errechnen.

Mit dem Verfahren lässt sich das Vorkollabiervolumen relativ einfach und auch mit einem geringen apparativen Aufwand ermitteln, so dass sich das Verfahren auch durch einen geringen Schulungsaufwand, geringe Rüstzeiten und geringe Bedienfehler auszeichnet.

Es sind lediglich zwei relevante Messstellen vorhanden, nämlich die die dem Behälter zufließende Flüssigkeitsmenge gravimetrisch erfassende Mess- oder Wiegevorrichtung, insbesondere Waage, und der das Vakuum beziehungsweise den Unterdruck im Vakuumbehälter erfassende Sensor, insbesondere Absolutdrucksensor. Diese beiden Messstellen lassen sich verhältnismäßig einfach kalibrieren.

Mit dem Verfahren ist ein Probendurchsatz von mehr als 40 Messungen/Stunde bei einem hohen Grad der Automatisierung und einer relativ großen Prozesssicherheit möglich.

Ein im Rahmen der Erfindung verwendeter Behälter kann entsprechend dem aus der WO 96/06011 A1, WO 00/49988 A2 und WO 99/43571 A1 jeweils bekannten Behälter für einen Zerstäuber bzw. Inhalator ausgeführt sein. Ein solcher Behälter weist eine starre Außenhülle und einen darin aufgenommenen Beutel auf. Der Beutel bildet einen Fluidraum für eine Arzneimittelzubereitung und kollabiert, wenn die Arzneimittelzubereitung entnommen wird.

Unter Außenatmosphäre wird imm Rahmen der Erfindung die außerhalb der Vakuumkammer und außerhalb des Flüssigkeitsvorrates oder Flüssigkeitsreservoirs an weiterer Flüssigkeit oder außerhalb einer Vorlagemenge an weiterer Flüssigkeit herrschende normale Erdatmosphäre und der damit jeweils verbundene Luftdruck verstanden.

Während es zur Durchführung des Verfahrens möglich ist, zunächst den vorkollabierten Behälter zu wiegen, dann unter Vakuum Flüssigkeit einzusaugen und dann zurückzuwiegen, erfolgt in Ausgestaltung die gravimetrische Erfassung der Flüssigkeitsmasse während des Einströmens der weiteren Flüssigkeitsmenge in den Behälter. Hier wird also kontinuierlich die dem Flüssigkeitsreservoir, das sich vorzugsweise in einem Vorlagebehälter befindet, entnommene Flüssigkeitsmenge oder Flüssigkeitsmasse gravimetrisch ermittelt und gemessen. Gegenüber der Einzelmessung des Behälters im Zustand vor Zuführung der weiteren Flüssigkeit und nach Zuführung der weiteren Flüssigkeit, bei der es zur Bestimmung des Vorkollabiervolumens notwendig ist, aus der Einwaage oder der Auswaage das Differenzgewicht zu ermitteln, wird nach der Ausgestaltung die Datenmenge halbiert und die Anzahl der Fehlerquellen verringert. Darüberhinaus ist die für die Durchführung der Messung benötigte Zeit verkürzt.

Zweckmäßigerweise wird als weitere Flüssigkeit Wasser oder der im Behälter bereits vorhandene Flüssigkeitstyp eingefüllt. Die Verwendung von Wasser als weitere Flüssigkeit hat den Vorteil, dass die Dichteabweichung im Bereich der Raumtemperatur bei ca. 20 °C vernachlässigbar ist und die Waageanzeige in Milligramm unmittelbar dem Vorkollabiervolumen in µl entspricht. Außerdem ist die Anwendung von Wasser mit einem problemlosen Handling verbunden, da es sich nicht um einen Gefahrstoff handelt. Darüber hinaus ist die Verdunstungsneigung von Wasser als Flüssigkeitsreservoir im Vorlagebehälter relativ gering.

Alternativ wird der Behälter mit einer alkoholhaltigen, insbesondere ethanolhaltigen, Lösung als Flüssigkeit befüllt. Insbesondere ist dies deshalb von Vorteil, weil die Volumenkontraktion einer ethanolhaltigen Lösung bei Mischen mit Wasser zu einer Verfälschung der Messergebnisse führen könnte. Es wird daher vorgezogen, als weitere Flüssigkeit einen Flüssigkeitstyp gleicher Art, insbesondere ein Ethanol/Wassergemisch im Konzentrationsbereich einer ethanolischen Formulierung 90 % v/v einzufüllen.

Bevorzugt wird ein Vakuum von 650-750 mbar (absolut), vorzugsweise 700 mbar (absolut), eingestellt. Mit einem solchen Vakuum oder Unterdruck in der Vakuumkammer lassen sich die besten reproduzierbaren Ergebnisse erzielen. Bei einem deutlich stärkeren Vakuum ist eine Dehnung des Folienmaterials, aus dem der Behälter oder ein als Folienbeutel ausgebildeter Behälter bzw. Behälterbestandteil üblicher Weise hergestellt ist, festzustellen, die dann ein nicht den tatsächlichen Gegebenheiten entsprechendes, größeres Vorkollabiervolumen widerspiegelt.

Nach einer Weiterbildung wird die weitere Flüssigkeitsmenge mittels einer Fluidleitung in den Behälter eingefüllt, deren eines Ende in den Behälter eintaucht und deren anderes Ende mit der Atmosphärendruck ausgesetzten Flüssigkeit beaufschlagt wird. Hierbei taucht vorteilhafterweise das andere Ende der Fluidleitung in eine Flüssigkeitsmenge ein, die auf einer Waage angeordnet ist, mittels der die durch die Fluidleitung abfließende Flüssigkeitsmasse, vorzugsweise kontinuierlich, gravimetrisch ermittelt und angezeigt wird.

Da kollabierbare Behälter oder Beutel hauptsächlich Anwendung im Bereich der Applikation von Pharmazeutika oder Kosmetika finden, ist vorteilhafterweise die Flüssigkeit ein flüssiges Pharmazeutikum oder Kosmetikum.

In Ausgestaltung der Vorrichtung weist die Vakuumkammer einen ein Gehäuseoberteil eines den Behälter umhüllenden Gehäuses gegen die Außenatmosphäre abdichtend umfassenden Deckel auf. Hierdurch ist es möglich, auf einfache Art und Weise eine Abdichtung der den Behälter aufnehmenden Vakuumkammer auszubilden und gleichzeitig die Möglichkeit bereitzustellen, mit einer Kanüle und/oder der Fluidleitung in das Behälterinnere, beispielsweise durch Durchstechung einer Versiegelung, einzudringen, wobei der Behälter in dem Deckel der Vakuumkammer von außen zugänglich gehalten ist.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand eines Ausführungsbeispieles unter Bezugnahme auf die zugehörigen Zeichnungen näher erläutert. Es zeigt:

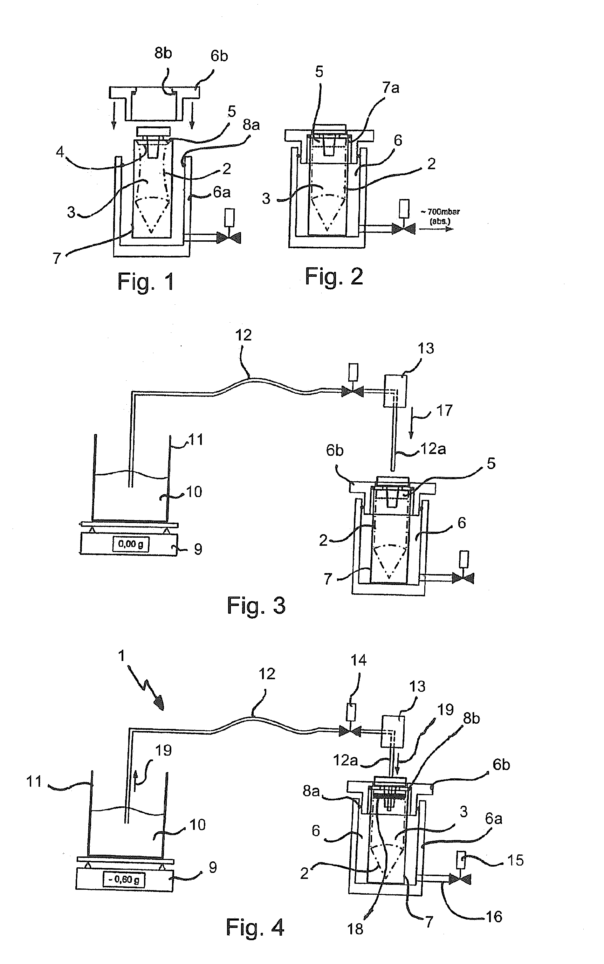

Fig.1 schematische Darstellungen der erfindungsgemäßen bis Vorichtung zur Durchführung des erfindungsgemäßen Fig. 4 Verfahrens.

Die Vorrichtung 1 dient zur Bestimmung eines beim Befüllen und Verschließen eines flexiblen und diffusionsdichten, im Anwendungsfall kollabierenden Behälters 2 mit einer Flüssigkeit 3 eingestellten Vorkollabiervolumens. Der Behälter 2 ist durch eine strichpunktierte Linie dargestellt und weist oberhalb eines Flüssigkeitsspiegels 4 der darin eingefüllten Flüssigkeit 3 eine Restluftblase oder ein Restvolumen 5 auf. Wie in Fig. 1 durch den konkaven Verlauf der Behälterwand andeutet, ist der Behälter 2 vorkollabiert, um das Restluftvolumen zu reduzieren und bei Ausdehnung der Flüssigkeit 3 eine Überbeanspruchung des Behälters 2 zu vermeiden.

Die Vorrichtung 1 umfasst eine Vakuumkammer 6, die den Behälter 2 zusammen mit einem diesen umhüllenden Gehäuse 7 aufnimmt. Die Vakuumkammer 6 ist von einem Behältertopf 6a und einem den Behältertopf 6a verschließenden Deckel 6b gebildet und mittels eines an dem Deckel 6b anliegenden Dichtungsringes 8a und eines am Gehäuseoberteil 7a des den Behälter 2 umhüllenden Gehäuses 7 anliegenden Dichrungsringes 8b gegen die Außenatmosphäre abgedichtet.

Weiterhin umfasst die Vorrichtung 1 eine Mess- oder Wiegevorrichtung 9 in Form einer Waage, insbesondere Analysenwaage. Ein Flüssigkeitsreservoir 10 oder eine Flüssigkeitsmenge ist in einem als Vorlagebehälter fungierenden Behältnis 11 angeordnet, das auf die Wiegevorrichtung 9 aufgesetzt ist, so dass das Gewicht oder die Masse des Flüssigkeitsreservoirs 10 gravimetrisch gemessen und Änderungen festgestellt werden können. Das Flüssigkeitsreservoir 10 steht mit der Außenatmosphäre, der normalen Luftatmosphäre und dem normalen Luftdruck, in Kontakt. Über eine Fluidleitung 12 ist das Flüssigkeitsreservoir 10 mit dem Inneren des Behälters 2 in fluidleitende Verbindung bringbar. Um das Einführen der Fluidleitung 12 in das Innere des Behälters 2 zu vereinfachen, ist diese endseitig mit einer Kanüle 12a ausgestattet, mit der beispielsweise eine die Eintrittsöffnung oder ein ins Innere des Behälters 2 eintauchendes Tauchrohr verschließende Versiegelung durchstochen werden kann. Um das Einstechen der Fluidleitung 12 beziehungsweise der Kanüle 12a in das Innere des Behälters 2 reproduzierbar zu wiederholen, ist die Vorrichtung 1 mit einer vertikalen Führung 13 ausgestattet. Damit die Fluidleitung 12 für den Durchfluss von Flüssigkeit aus dem Flüssigkeitsreservoir 10 geöffnet und geschlossen werden kann, ist ein erstes Ventil 14 in die Fluidleitung 12 eingesetzt. In die Vakuumkammer 6 mündet eine mit einem zweiten Ventil 15 versehene Vakuumleitung 16, die zur Erzeugung eines Vakuums oder Unterdrucks an eine nicht näher dargestellte Vakuumpumpe angeschlossen ist.

Zur gravimetrischen Bestimmung des beim Befüllen und Verschließen des flexiblen und diffusionsdichten, im Anwendungsfall kollabierenden Behälters 2 mit einer Flüssigkeit 3 eingestellten Vorkollabiervolumens wird der vorkollabierte Behälter 2, wie in Fig. 1 dargestellt, mit dem ihn umhüllenden Gehäuse 7 in den Behältertopf 6a eingesetzt. Der Vorkollabierzustand ist durch die konkav gezeigten Seitenwandbereiche des Behälters 2 angedeutet. Der Behältertopf 6a wird mit dem Deckel 6b verschlossen, wobei der Dichtring 8b das Gehäuseoberteil 7a abdichtet erfasst und der Dichtring 8a die Vakuumkammer 6a gegen die Außenatmosphäre abdichtet. Bei der Flüssigkeit 3 handelt es sich um eine e-thanolhaltige Flüssigkeit. In dem in Fig. 1 dargestellten Zustand ist nach dem Verschließen des Deckels 6b bis zum Anlegen eines Vakuums zunächst der Behälter 2 druckneutral in der Vakuumkammer 6 angeordnet, d.h. der Druck in der Vakuumkammer 6 und der Druck im Behälter 2 sowie der Druck der Außenatmosphäre sind gleich groß. Im nächsten Schritt wird gemäß Fig. 2 nach Öffnung des Ventils 15 mit Hilfe der Vakuumleitung 16 in der Vakuumkammer 6 ein Vakuum mit einem Unterdruck von ungefähr 700 mbar (absolut) erzeugt und anschließend das Ventil 15 geschlossen. In diesem Zustand liegt außen an dem Behälter 2 das Vakuum an, das eine Ausdehnung der Restluftblase oder des Restluftvolumens 5 bewirkt, so dass sich der Behälter 2 so lange aufbläht, bis der Innendruck im Behälter 2 dem Vakuum bzw. Unterdruck in der Vakuumkammer 6 entspricht. Das Restluftvolumen 5 ist nun druckvermindert und sein Volumen entsprechend angestiegen.

Durch geeignete Maßnahmen wird die Fluidleitung 12 entlüftet, damit die Flüssigkeit 3 aus dem Flüssigkeitsreservoir 10 bis in die Spitze der Kanüle 12a gelangen kann. In einem nächsten Schritt wird das aus Flüssigkeit 3 bestehende Flüssigkeitsreservoir zusammen mit dem Behältnis 11 auf der Wiegevorrichtung 9 tariert, so dass die Wiegevorrichtung 9 im Ausführungsbeispiel "0,00 g" anzeigt. Anschließend wird bei geschlossenem Ventil 14 und bei in der Vakuumkammer 6 anstehendem Vakuum die Kanüle 12a in Richtung des Pfeils 17 unter Durchstechung der Versiegelung ins Innere des Behälters 2 eingeführt. Anschließend wird das Ventil 14 geöffnet, mit der Folge, dass, wie in Fig. 4 durch die Pfeile 19 dargestellt, aus dem Flüssigkeitsreservoir 10 die darin enthaltene Flüssigkeit 3 durch die Fluidleitung 12 ins Innere des Behälters 2 strömt. Durch das Öffnen des Ventils 14 erhält der bisher abgeschlossene Innenraum des Behälters 3 Zugang nach außen, so dass die an der Flüssigkeit 3 des Flüssigkeitsreservoirs 10 anstehende Atmosphäre mit normalen Umgebungsdruck die Flüssigkeit 3 in den Folienbeutel respektive den Behälter 2 solange eindrückt und einfüllt, bis der Innendruck innerhalb des Behälters 2 dem atmosphärischen Außendruck oder Umgebungsdruck entspricht. Wie aus der Fig. 4 ersichtlich ist, wird das Restvolumen 5, das sich bei Anlegung des Vakuums, beispielsweise gemäß Fig. 3, gebildet hat, nun zum Teil von der zuströmenden und in der Fig. 4 als schwarzer Balken dargestellten Flüssigkeitsmenge ausgefüllt, so dass als Restluftvolumen wieder ein Volumen 5 verbleibt, das dem ursprünglichen Restluftvolumen des vorkollabierten Behälters 2 entspricht, das in Fig. 1 dargestellt ist. Es strömt solange Flüssigkeit 3 in den Behälter 2 ein, bis der Druck im Inneren des Behälters 2 gleich dem Außendruck der Außenatmosphäre ist. Das bis zum Erreichen dieses Zustandes eingeströmte und in Fig. 4 als schwarzer Balken dargestellte Volumen an Flüssigkeit 3 entspricht dem Vorkollabiervolumen 18. Die aus dem Flüssigkeitsreservoir 10 in das Innere des Behälters 2 geströmte Flüssigkeit 3 führt zu einer entsprechenden Reduzierung der Flüssigkeitsmenge und Masse des Flüssigkeitsreservoirs 10, so dass die Masse dieser weiteren in den Behälter 2 eingefüllten Flüssigkeitsmenge von der Mess- oder Wiegevorrichtung 9 erfasst und unmittelbar an der Anzeige der Mess- oder Wiegevorrichtung 9, im vorliegenden Beispiel als Gewichtsabnahme von -0,60 g, ablesbar ist. Während des Einfüllens der weiteren Flüssigkeitsmenge aus dem Flüssigkeitsreservoir 10 in den Innenraum des Behälters 2 lässt sich die überführte Masse kontinuierlich durch Verfolgung der Anzeige der Wiegevorrichtung 9 verfolgen. Der nach Stillstand des Einfüllvorgangs festgestellte Wert wird dokumentiert. Aus diesem Wert lässt sich nun mithilfe der bekannten Dichte der als weitere Flüssigkeit in den Behälter 2 eingefüllten Flüssigkeit 3 das Volumen der eingefüllten Flüssigkeitsmenge und das Vorkalibriervolumen 18 errechnen.

## Patentansprüche

1. Verfahren zur Bestimmung eines beim Befüllen und Verschließen eines flexiblen und diffusionsdichten, im Anwendungsfall kollabierenden Behälters (2) mit einer Flüssigkeit (3) eingestellten Vorkollabiervolumens (18), **dadurch gekennzeichnet, dass** der befüllte Behälter (2) in eine Vakuumkammer (6) eingesetzt und in der Vakuumkammer (6) ein außenseitig am Behälter anliegendes, definiertes Vakuum erzeugt wird, bei Anliegen des definierten Vakuums bis zum Erreichen des Druckausgleichs eine mit der Außenatmosphäre in Kontakt stehende weitere Flüssigkeitsmenge in den Behälter (2) eingefüllt wird, die Masse der in den Behälter einströmenden weiteren Flüssigkeitsmenge gravimetrisch erfasst und aus der erfassten Flüssigkeitsmasse deren Volumen als das Vorkollabiervolumen (18) errechnet wird.

2. Verfahren nach Anspruch 1, **dadurch gekennzeichnet, dass** die gravimetrische Erfassung der Flüssigkeitsmasse während des Einströmens der weiteren Flüssigkeitsmenge in den Behälter (2) erfolgt.

3. Verfahren nach Anspruch 1 oder 2, **dadurch gekennzeichnet, dass** als weitere Flüssigkeit Wasser oder der im Behälter (2) bereits vorhandene Flüssigkeitstyp eingefüllt wird.

4. Verfahren nach einem der Ansprüche 1 bis 3, **dadurch gekennzeichnet, dass** der Behälter (2) mit einer alkoholhaltigen, insbesondere ethanolhaltigen, Lösung als Flüssigkeit befüllt wird.

5. Verfahren nach einem der Ansprüche 1 bis 4, **dadurch gekennzeichnet, dass** in der Vakuumkammer (6) ein Vakuum von 650-750 mbar (absolut), vorzugsweise 700 mbar (absolut), eingestellt wird.

6. Verfahren nach einem der Ansprüche 1 bis 5, **dadurch gekennzeichnet, dass** die weitere Flüssigkeitsmenge mittels einer Fluidleitung (12) in den Behälter (2) eingefüllt wird, deren eines Ende in den Behälter (2) eintaucht und deren anderes Ende mit der Atmosphärendruck ausgesetzten Flüssigkeit beaufschlagt wird.

7. Verfahren nach Anspruch 6, **dadurch gekennzeichnet, dass** das andere Ende der Fluidleitung (12) in eine Flüssigkeitsmenge eintaucht, die auf einer Waage angeordnet ist, mittels der die durch die Fluidleitung (12) abfließende Flüssigkeitsmasse, vorzugsweise kontinuierlich, gravimetrisch ermittelt und angezeigt wird.

8. Verfahren nach einem der Ansprüche 1 bis 7, **dadurch gekennzeichnet, dass** die Flüssigkeit ein flüssiges Pharmazeutikum oder Kosmetikum ist.

9. Vorrichtung zur Bestimmung eines beim Befüllen und Verschließen eines flexiblen und diffusionsdichten, im Anwendungsfall kollabierenden Behälters (2) mit einer Flüssigkeit (3) eingestellten Vorkollabiervolumens (18), **gekennzeichnet durch**
- eine den Behälter (2) aufnehmende Vakuumkammer (6), in der ein definiertes Vakuum erzeugbar ist,
- eine von einem Flüssigkeitsreservoir (10) ausgehende und in den in der Vakuumkammer (6) angeordneten Behälter (2) einführbare Fluidleitung (12) und
- eine die Masse einer von dem Flüssigkeitsreservoir (10) in den Behälter (2) einfließenden weiteren Flüssigkeitsmenge gravimetrisch erfassende Mess- oder Wiegevorrichtung (9).

10. Vorrichtung nach Anspruch 9, **dadurch gekennzeichnet, dass** die Vakuumkammer (6) einen ein Gehäuseoberteil (7a) eines den Behälter (2) umhüllenden Gehäuses (7) gegen die Außenatmosphäre abdichtend umfassenden Deckel (6b) aufweist.
